# EUROPÄISCHE PATENTSCHRIFT

(11) **EP 1 300 376 B1**
(45) Veröffentlichungstag und Bekanntmachung des Hinweises auf die Patenterteilung: **29.11.2006**
(21) Anmeldenummer: 02021359.1
(22) Anmeldetag: 24.09.2002
(51) Int. Cl.: C04B 35/83, C04B 38/00, C04B 41/88, C04B 35/573, F16D 69/02

(54) **Verfahren zur Herstellung von Hohlkörpern aus faserverstärkten keramischen Materialien**
Process of manufacturing fiber reinforced ceramic hollow bodies
Procédé pour fabriquer des objets creux en céramique renforcés de fibres

(30) Priorität: 02.10.2001 DE 10148659
(43) Veröffentlichungstag der Anmeldung: 09.04.2003
(73) Patentinhaber: AUDI AG, 85045 Ingolstadt (DE)
(72) Erfinder: Bauer, Moritz, 86153 Augsburg (DE); Heine, Michael, Dr., 86695 Allmannshofen (DE); Gruber, Udo, 86356 Neusäss (DE); Hüner, Ronald, Dr., 86674 Baar (DE); Kienzle, Andreas, Dr., 86672 Thierhaupten (DE); Rahn, Andreas, 86637 Wertingen (DE); Zimmermann-Chopin, Rainer, Dr., 86679 Ellgau (DE)
(74) Vertreter: Deckers, Hellmuth Alexander

(56) Entgegenhaltungen:
- EP-A- 1 008 569
- WO-A-96/13470
- WO-A-98/42635
- DE-A- 19 834 571
- US-A- 3 867 491
- US-A- 4 847 063

## Beschreibung

Die vorliegende Erfindung bezieht sich auf ein Verfahren zur Herstellung von Hohlkörpern aus faserverstärkten keramischen Materialien. Insbesondere betrifft die Erfindung ein Verfahren zur endkonturnahen Herstellung eines porösen faserverstärkten Kohlenstoff-haltigen Formkörpers mit Ausnehmungen oder Hohlräumen, insbesondere eines faserverstärkten C/C-Körpers (mit Kohlenstoffasern verstärkter Kohlenstoff, engl. "CFC" oder "CFRC", carbon fibre reinforced carbon), der aus binderhaltigen Faserstoffmassen mittels eines Preßvorganges unter Verwendung von Preßkernen geformt und in einer nachfolgenden thermischen Behandlung zu C/C umgesetzt wird, sowie gegebenenfalls die Nachverdichtung dieses porösen faserverstärkten Kohlenstoff-haltigen Formkörpers unter Ausbildung einer Kohlenstoff-haltigen keramischen Matrix, insbesondere durch eine Flüssigmetall-Infiltration in den C/C-Körper, wobei die Matrix dann Metalle und Metallcarbide sowie gegebenenfalls Reste von nicht umgesetztem Kohlenstoff enthält.

Das erfindungsgemäße Verfahren betrifft insbesondere die Herstellung von mit Kohlenstoffasern verstärkten keramischen Verbundwerkstoffen mit Ausnehmungen und Hohlräumen, welche über die Flüssigmetallinfiltration mit Siliciumschmelzen unter Reaktion zumindest eines Teiles des Kohlenstoffes zu Siliciumcarbid in mit Kohlenstoffasern verstärkte Verbundwerkstoffe mit SiC-haltiger oder Kohlenstoff- und SiC-haltiger Matrix (C/SiC- oder C/C-SiC-Werkstoffe) umgesetzt werden. Anwendung finden diese Verbundwerkstoffe insbesondere bei Brems-, Kupplungs- und Reibscheiben, sowie als hochtemperaturbeständige Konstruktionswerkstoffe.

Heutzutage überwiegend verwendete Materialien für Bremsscheiben im Automobilbau sind Stahl oder Grauguß, und in der Luftfahrt mit Kohlenstoffasern verstärkte Kohlenstoff-Werkstoffe (C/C). Die geforderten Eigenschaften der Scheibenmaterialien sind dabei hohe mechanische Stabilität, Temperaturbeständigkeit, Härte und Verschleißfestigkeit gegenüber dem Reibpartner in der Reibpaarung der Bremse. Die Einsatztemperatur bisher verwendeter Graugußbremsscheiben ist dabei durch den Schmelzpunkt des Materials limitiert. Die mechanische Versagenstemperatur liegt, abhängig von der Belastung, bereits deutlich unterhalb des Schmelzpunktes. Weiterhin tritt durch Umwandlung des metallischen Gefüges beim Erhitzen die Gefahr einer Rißbildung in den Scheiben auf. Die Verwendung von faserverstärkter Keramik als Werkstoff für Bremsscheibenanwendungen erweist sich als Lösung für diese Problematik. Insbesondere Werkstoffe auf der Basis von mit Kohlenstoffasern verstärktem Siliciumcarbid (C/SiC) haben sich für diese Anwendung als geeignet erwiesen. Die Vorteile dieses Materials sind die niedrigere Dichte (damit niedrigeres Gewicht bei gleichem Volumen), die hohe Härte und Temperaturbeständigkeit bis ca. 1400 °C und nicht zuletzt die extrem hohe Verschleißbeständigkeit. Das deutlich geringere Gewicht von Bremsscheiben aus diesen C/SiC-Werkstoffen erweist sich als positiver Einflußfaktor zur Verbesserung des Komforts und der Sicherheit durch die Reduktion der ungefederten Massen bei Kraftfahrzeugen und als wirtschaftlicher Faktor im Bereich der Luftfahrt. Die große Härte und Verschleißbeständigkeit von C/SiC-Bauteilen ermöglicht hier weit höhere Standzeiten im Vergleich zu bisher üblichen Materialien auf C/C-Basis oder Metallbasis.

Ein Verfahren zur Herstellung von C/SiC-Bauteilen ist beispielsweise aus der Schrift DE-A 197 10 105 bekannt und umfasst unter anderem die folgenden Schritte :
- Herstellen einer preßfähigen Mischung aus Kohlenstoff-haltigen Fasern oder Faserbündeln, die mit einer Beschichtung überzogen sein können, einerseits und Füllmitteln und/oder Bindemitteln wie beispielsweise Harzen und/oder Pech andererseits,
- Formgebung der Mischung unter Druck und Temperatur und Carbonisierung der Kohlenstoff-haltigen Füll- und Bindemittel zur Herstellung eines Formkörpers, insbesondere eines aus mit Kohlenstoffasern verstärktem Kohlenstoff bestehenden Formkörpers (C/C) und gegebenenfalls Graphitierung
- Infiltrieren zumindest einer Randschicht des Formkörpers mit einer Silicium-Schmelze und zumindest partielle Reaktion des Kohlenstoffs im Formkörper zu SiC, wobei sich ein Formkörper bildet, der wenigstens in der Randschicht aus einer Verbundkeramik mit in einer Matrix aus überwiegend SiC, Si und C eingebetteten, Kohlenstoff-haltigen Fasern besteht (hier ebenfalls als C/SiC bezeichnet).

Im folgenden soll unter C/SiC allgemein auch die Werkstoffvariante verstanden werden, bei der wie oben beschrieben nur eine Randschicht siliciert wird.

Zu den üblichen Herstellungsverfahren gehören auch diejenigen, bei denen der C/C-Körper über die Flüssig- oder Gas-Phase mit Kohlenstoff-Vorläufern ("carbon precursors", Substanzen, die beim Erhitzen unter Ausschluß von oxydierenden Medien Kohlenstoff bilden) oder mit Kohlenstoff nachverdichtet wird, oder die Matrix aus überwiegend SiC, Si und C durch eine Gasphaseninfiltration (CVD, Chemical Vapour Deposition, oder CVI, Chemical Vapour Infiltration) oder durch die Pyrolyse von Si-haltigen präkeramischen Polymeren erzeugt wird.

Heutige metallische Bremsscheiben besitzen häufig von Luft durchströmte Lüftungsschlitze oder -kanäle innerhalb der Scheibe, um das Temperaturniveau der Scheibe zu reduzieren und den Verschleiß der Reibbeläge bei hoher Belastung zu senken. Derartige Lüftungskanäle werden auch bei Bremsscheiben aus keramischen Materialien ausgebildet, besonders um das Temperaturniveau mit Rücksicht auf Bremsbeläge und weitere Systemkomponenten zu senken.

Ein Verfahren zur Herstellung von Reibeinheiten aus C/C-SiC-Werkstoff mit Lüftungskanälen, Hohlräumen und Ausnehmungen, bei dem ein endkonturnah strukturierter poröser Kohlenstoffkörper mit flüssigem Silicium infiltriert wird, ist aus der EP-B 0 788 468 bekannt. Dieses Verfahren nutzt den Umstand, daß sich die Siliciumflüssiginfiltration und Ausbildung der Si- und SiC-reichen Verbundwerkstoff-Matrix nahezu ohne Geometrieänderung des C/C-Vorkörpers vollzieht, so daß die Hohlräume und Ausnehmungen bereits im relativ weichen und gut zu bearbeitenden C/C-Vorkörper angelegt werden können und nicht erst in der sehr harten C/C-SiC-Verbundkeramik. Unter anderem wird vorgeschlagen, die Hohlräume und Ausnehmungen durch lösliche Kerne aus Schaumpolystyrol wie ^{®}Styropor oder andere Hartschäume, durch pyrolysierbare Kerne aus Polyvinylalkohol, oder durch entnehmbare Kerne aus Gummi, Metall oder Keramik zu bilden.

Für die verwendete Druckformgebung mit thermischer Aushärtung der Preßmasse erweisen sich die hier als Matrixmaterial vorgeschlagenen Kunststoffe als zu weich und thermisch unbeständig. Die Behandlung mit Lösungsmittel zur Entfernung der Kerne birgt die Gefahr der Zerstörung des im allgemeinen noch sehr weichen Vorkörpers. Diese Gefahr besteht ebenso bei der Pyrolyse des vorgeschlagenen Kunststoffes Polyvinylalkohol, der beim Erhitzen innerhalb der Vorform gasförmige Zersetzungsprodukte bildet, die heftig austreten und den Formkörper sprengen können. Auch die üblichen Metalle und Keramiken sind für die thermischen Prozesse zur Härtung des druckgeformten Grünkörpers und dessen Carbonisierung zum C/C-Vorkörper aufgrund ihrer im allgemeinen unangepaßten thermophysikalischen Eigenschaften ungeeignet.

In der DE-C 198 34 571 wird ein weiteres Verfahren vorgeschlagen, Hohlräume in einem Werkstück aus C/SiC-Verbundkeramik zu bilden. Die Hohlräume entstehen bei der Vorformfertigung durch Druckformgebung unter Verwendung von Kernen aus Silicium, Siliciumlegierungen oder Si/BN-Mischungen. Dabei werden die Kerne bis zum Schritt der Flüssiginfiltration mit Silicium nicht aus der Vorform entfernt, sondern dienen vielmehr als Siliciumquelle für die Silicierung. Die Vorform muß vor dem Silicieren erhitzt und zu einem C/C-Vorkörper umgesetzt werden, wobei die organischen Bestandteile, wie zum Beispiel Binder, zersetzt werden und eine Schwindung der Vorform eintritt. Diese Schwindung führt zu einem Aufschrumpfen des Vorkörpers auf die siliciumhaltigen Kerne, welche ihrerseits durch die Erhitzung noch zusätzlich eine thermische Expansion erfahren. Im allgemeinen treten hier unerwünschte Spannungen oder gar Zerstörungen in der Vorform auf, die es zu vermeiden gilt.

Aufgabe der Erfindung ist es daher, ein Verfahren zu entwickeln, das zur endkonturnahen Druckformgebung von faserverstärkten Kohlenstoff-haltigen Vorkörpern geeignet ist, wobei sich die Kerne ohne Beeinträchtigung des ausgehärteten Vorkörpers schonend, einfach und rückstandsfrei aus dem Vorkörper entfernen lassen.

Diese Aufgabe wird erfindungsgemäß dadurch gelöst, daß Kerne aus solchen nichtschmelzenden Materialien verwendet werden, die im weiteren thermischen Prozeß gegenüber dem (dem später gebildeten Hohlkörper entsprechenden) Vorkörper eine Schwindung aufweisen, die insbesondere durch einen Carbonisierungsschritt hervorgerufen werden kann, so daß sie sich leicht aus dem Vorkörper herausnehmen lassen. Die vom Kern befreiten Vorkörper können darin gegebenenfalls der Infiltration mit geschmolzenem Metall, insbesondere Silicierung, zur fertigen Verbundkeramik zugeführt werden. Silicium wird im Rahmen dieser Anmeldung ebenfalls unter dem Begriff "Metalle" subsumiert.

Die Erfindung betrifft daher ein Verfahren zur Herstellung von Hohlkörpern aus faserverstärkten keramischen Materialien, wobei
- im ersten Schritt Kerne hergestellt werden, deren Form der der Hohlräume entspricht,
- im zweiten Schritt ein Grünkörper hergestellt wird, indem in eine Form die genannten Kerne und eine preßfähige Masse gefüllt werden, wobei die preßfähige Masse Kohlenstoffasern und/oder Kohlenstoffäden und Pech und/oder Harze enthält, welche bei Wärmebehandlung unter Ausschluß von Oxydationsmitteln Kohlenstoff-haltige Rückstände bilden, derart daß die Lage der Kerne der gewünschten Lage der zu bildenden Hohlräume entspricht,
- im dritten Schritt der die Kerne enthaltende Grünkörper durch Erwärmen auf eine Temperatur von 120 °C bis 280 °C in einer Preßform durch Pressen unter Druck verfestigt wird,
   - im vierten Schritt der auch als Vorkörper bezeichnete verfestigte die Kerne enthaltende Grünkörper durch Erhitzen unter Ausschluß von Luft und anderen Oxydationsmitteln auf eine Temperatur von ca. 750 °C bis ca. 1100 °C zu einem C/C-Körper carbonisiert wird, und gegebenenfalls
- im fünften Schritt der C/C-Körper unter Erhalt seiner Form mit flüssigem Metall infiltriert wird, wobei zumindest teilweise eine Reaktion des Kohlenstoff-Anteils der
   Matrix des C/C-Körpers mit dem Metall unter Bildung von Carbiden abläuft,
wobei die Kerne aus einem Material bestehen, das nicht schmelzbar ist, sich jedoch oberhalb der Härtungstemperatur bei der Druckformgebung der preßfähigen Masse zumindest teilweise während der Behandlung bis zur und während der Carbonisierung des die Kerne enthaltenden Grünkörpers zersetzt unter Volumenschwindung um zumindest 10 % des ursprünglichen Volumens der Kerne, so daß sich die geschwundenen Kerne aus dem carbonisierten Körper entnehmen lassen, und wobei der Pyrolyserückstand der Kerne bei 900 °C mindestens 10 % von deren ursprünglicher Masse beträgt.

Die Schwindung setzt bevorzugt bei Temperaturen von mindestens 20 °C oberhalb der Formgebungstemperatur des Grünkörpers (dritter Schritt) ein und beträgt üblicherweise mindestens 10 % des ursprünglichen Kernvolumens, bevorzugt mindestens 20 % und besonders bevorzugt mindestens 30 %. Bevorzugt ist der lineare thermische Ausdehnungskoeffizient des für die Kerne verwendeten Materials bis zu dessen Zersetzungstemperatur höchstens 1·10⁻⁵ K⁻¹.

Allgemein eignen sich zur Formung der Kerne die bekannten Formungsverfahren, wie Kalt- oder Heiß-Pressen, Spritzguß oder spanende Bearbeitung, je nach eingesetztem Material. Das erfindungsgemäße Verfahren sieht vor, daß im zweiten Schritt preßfähige Massen aus Fasern, thermisch aushärtbaren Bindern, und -insbesondere Kohlenstoff-haltigen-Zuschlagstoffen zu Grünkörpern mit Hohlräumen und/oder Aussparungen verpreßt werden.

Bevorzugt werden die Kohlenstoffaserschichten des C/C-Vorkörpers in der Nähe des Kerns in vorgegebener Vorzugsrichtung der Kohlenstoff-Verstärkungsfasern auf den Kern aufgebaut. Hierfür werden bevorzugt solche preßfähigen Massen verwendet, die Kohlenstoffasern mit einer mittleren Länge von mindestens 5 mm enthalten. Bevorzugt wird dann die preßfähige Masse des zweiten Schrittes so in die Form gefüllt, daß die Kohlenstoffasern in der Nähe des Kerns überwiegend parallel zur Richtung der höchsten Zugbeanspruchung des resultierenden Formteils orientiert sind. Überwiegend bedeutet in diesem Zusammenhang mindestens 50 %. Es ist auch möglich, die Kerne mit parallel gelegten und gebundenen Kohlenstoffäden (englisch "tapes" oder "UDT" = unidirectional tapes genannt) zu umwickeln, und diese Hülle gegebenenfalls mit thermisch aushärtbaren Bindern zu fixieren. Auf diese Schicht vorzugsorientierter Kohlenstoffasern oder -fäden werden dann üblicherweise weitere preßfähige Massen mit geringerer Faser-, oder Faserbündellänge geschichtet.

In einer anderen bevorzugten Ausführungsform werden Kohlenstoffasern in Form von beschichteten Kurzfaserbündeln eingesetzt. Besonders bevorzugt sind hierbei mit graphitiertem Kohlenstoff beschichtete Fasern, beziehungsweise Faserbündel mit mittleren Längen unterhalb von 5 mm.

Als thermisch aushärtbare Binder werden Peche wie Kohlenteerpech oder Erdölpech und/oder bevorzugt härtbare Harze wie Phenolharze; Epoxidharze, Polyimide, füllstoffhaltige Mischungen mit Furfurylalkohol oder Furanharze eingesetzt. Die Massen werden hierzu in eine Preßform eingefüllt, wobei in der Form verlorene Kerne vorgesehen werden. Die Kerne nehmen den Raum der später in der Verbundkeramik zu bildenden Hohlräume oder Aussparungen ein. Nach dem Befüllen der Preßform wird die Masse gepreßt und unter Temperatureinwirkung ausgehärtet.

Gemäß der Erfindung werden unschmelzbare, aber gegebenenfalls carbonisierbare Materialien für die Kerne eingesetzt. Diese Materialien zersetzen sich zumindest teilweise während der thermischen Behandlung bis zur und während der Carbonisierung des Grünkörpers unter Volumenschwindung. Maßgeblich ist hierbei, daß die Kerne während der Zersetzung eine erhebliche Volumenschwindung von mindestens 10 % ihres Ausgangsvolumens, zumindest aber eine größere Volumenschwindung als der Grünkörper erfahren, so daß sich das Kernmaterial vom Grünkörper ablöst. Hierdurch wird vermieden, daß der Austritt der gasförmigen Zersetzungsprodukte (Pyrolysegase) zu einer Schädigung des Grünkörpers beziehungsweise des C/C-Körpers führt.

Die Kerne bestehen aus einem nicht-schmelzbaren Material, das im allgemeinen eine hohe Formbeständigkeitstemperatur besitzt, üblicherweise mindestens 200 °C, bevorzugt mindestens 230 °C, und insbesondere mindestens 250 °C. Hierdurch sind höhere Aushärtungstemperaturen des Grünkörpers bei der Formgebung möglich, wodurch sich unter anderem in vorteilhafter Weise der Aushärtungsprozeß beschleunigen läßt. Häufig werden die unschmelzbaren Kerne während der Carbonisierung des Grünkörpers jedoch vollständig oder nahezu vollständig zersetzt, im letzteren Fall werden sie carbonisiert, das heißt, es verbleiben noch Kohlenstoffreste. Bevorzugt sind hier Materialien, die nicht zu pulvrigen, sondern möglichst zu groben Fragmenten carbonisiert werden, da sich letztere in einfacher Weise aus dem Grünkörper entfernen lassen, ohne die Poren des C/C-Körpers zu verstopfen oder zu verkleben. Hierzu gehören insbesondere Hölzer und Kunstholz. Hinsichtlich der Minimierung des Aufwandes zum Entfernen des Kohlenstoffrestes wäre eine möglichst vollständige Pyrolyse anzustreben. Dies würde aber bedeuten, daß sehr viel Pyrolysegas entsteht, mit den oben genannten Nachteilen. Daher werden solche carbonisierbaren Materialien für die Herstellung der Kerne bevorzugt, die bei Pyrolysetemperaturen von ca. 900 °C einen Kohlenstoffrückstand oder Pyrolyserückstand aufweisen, der mindestens 10 %, bevorzugt mindestens 25 % und besonders bevorzugt mindestens 30 % der Masse des eingesetzten Kerns beträgt. Geeignete Materialien für carbonisierbare Kerne sind Holz, Preßholz, synthetische Holzformmassen und Duroplaste. Bevorzugt sind mit Harnstoff- oder Melaminharzen gebundenes Preßholz und synthetisches Holz.

Es ist auch möglich, faserverstärkte und/oder gefüllte Materialien für die Kerne zu verwenden, bei denen die Matrix unschmelzbar, jedoch thermisch vollständig oder zumindest teilweise abbaubar ist, und bei denen die Füllstoffe nach dem thermischen Abbau zurückbleiben. Solche Füllstoffe sind die bekannten inerten Füllstoffe aus keramischen Materialien, Mineralstoffen, Glas und Metallen, wie Kreide, Glaskugeln, Mikroglaskugeln, "microspheres", Mineralfasern wie Wollastonit, Glasfasern, Kohlenstoffasern, und keramische Fasern wie Siliciumnitrid- oder -carbidfasern.

Nach der Carbonisierung des Grünkörpers werden gegebenenfalls angefallene Pyrolyse-, beziehungsweise Kohlenstoffreste oder die Reste der Füllstoffe in den gebildeten Hohlräumen beispielsweise durch Ausblasen mit einem Luftstrom beseitigt und es wird ein poröser C/C-Körper mit Hohlräumen oder Ausnehmungen erhalten, der sich weiterverwerten läßt.

Er kann nachbearbeitet oder wiederum zu komplexeren Strukturen zusammengesetzt oder geklebt werden.

Im einem fünften Schritt wird der poröse C/C-Körper gegebenenfalls nachverdichtet, um zu einem besser gebrauchsfähigen Werkstück zu gelangen.

In einer bevorzugten Ausführungsform des erfindungsgemäßen Verfahrens wird der Kohlenstoff des C/C-Körpers durch eine Schmelzinfiltration mit Metallen und die gegebenenfalls anschließende Wärmebehandlung zumindest teilweise zu den entsprechenden Carbiden umgesetzt. Bevorzugt ist die Schmelzinfiltration mit Silicium, wobei sich zumindest ein Teil des Kohlenstoffs (bevorzugt der Kohlenstoff in der Matrix) zu Siliciumcarbid umsetzt; die Matrix enthält dann SiC, nicht umgesetzten Kohlenstoff sowie nicht umgesetztes Silicium. Hierzu wird der C/C-Körper mit Siliciumpulver überschichtet und auf Temperaturen von ca. 1500 bis ca. 1800 °C im Vakuum erhitzt. Je nach beabsichtigter Verwendung ist es dabei nicht zwingend notwendig, den gesamten C/C-Körper in C/SiC umzusetzen, im allgemeinen wird aber zumindest die Randschicht zu C/SiC umgesetzt. Obwohl die Siliciumschmelzinfiltration das bevorzugte Verfahren ist, kann der C/C-Körper auch mit anderen üblichen Verfahren unter Ausbildung der in der Verbundwerkstofftechnologie gängigen Matrices nachverdichtet werden. Insbesondere kann das Flüssigsilicierverfahren auch mit Siliciumlegierungen durchgeführt werden, die unter anderem Metalle wie Cr, Fe, Co, Ni, Ti und/oder Mo enthalten können.

Das beschriebene Verfahren kann bevorzugt zur Herstellung von Bremsscheiben oder Kupplungsscheiben verwendet werden. Hierbei werden in eine zylindrische Form die preßfähige Masse sowie die Kerne gefüllt, wobei als unterste und oberste Lage bevorzugt durchgehende Schichten der preßfähigen Masse gefüllt werden. Die Dicke der Boden- und Deckschicht beträgt nach dem Verpressen vorzugsweise mindestens 7 mm. Der Formkörper, der die Brems- oder Kupplungsscheibe bildet, hat üblicherweise die Gestalt einer Ringscheibe, d. i. der achsennahe Raum ist durchgehend über die gesamte Dicke der Scheibe leer. Die Kerne werden bevorzugt rotationssymmetrisch um die Achse des Zylinders angeordnet, wobei bevorzugt mindestens 2 und höchstens 16 Kerne eingesetzt werden. Die Form der Kerne ist bevorzugt derart, daß die gebildeten Hohlräume von der Peripherie des zylindrischen Formkörpers bis zum inneren Rand des Formkörpers reichen und damit einen offenen Durchgang zwischen dem inneren und äußeren zylindrischen Rand der Ringscheibe bilden.

## Patentansprüche

1. Verfahren zur Herstellung von Hohlkörpern aus faserverstärkten keramischen Materialien, wobei
- im ersten Schritt Kerne hergestellt werden, deren Form der der Hohlräume entspricht,
- im zweiten Schritt ein Grünkörper hergestellt wird, indem in eine Form die genannten Kerne und eine preßfähige Masse gefüllt werden, wobei die preßfähige Masse Kohlenstoffasern und/oder Kohlenstoffäden und Pech und/oder Harze enthält, welche bei Wärmebehandlung unter Ausschluß von Oxydationsmitteln Kohlenstoff-haltige Rückstände bilden, derart daß die Lage der Kerne der gewünschten Lage der zu bildenden Hohlräume entspricht,
- im dritten Schritt der die Kerne enthaltende Grünkörper durch Erwärmen auf eine Temperatur von 120 °C bis 280 °C in einer Preßform durch Pressen unter Druck verfestigt wird,
- im vierten Schritt der auch als Vorkörper bezeichnete verfestigte die Kerne enthaltende Grünkörper durch Erhitzen unter Ausschluß von Luft und anderen Oxydationsmitteln auf eine Temperatur von ca. 750 °C bis ca. 1100 °C zu einem C/C-Körper carbonisiert wird,
wobei die Kerne aus einem Material bestehen, das nicht schmelzbar ist, sich jedoch oberhalb der Härtungstemperatur bei der Druckformgebung der preßfähigen Masse zumindest teilweise während der Behandlung bis zur und während der Carbonisierung des die Kerne enthaltenden Grünkörpers zersetzt unter Volumenschwindung um zumindest 10 % des ursprünglichen Volumens der Kerne, so daß sich die geschwundenen Kerne aus dem carbonisierten Körper entnehmen lassen, und wobei der Pyrolyserückstand der Kerne bei 900 °C mindestens 10 % von deren ursprünglicher Masse beträgt.

2. Verfahren nach Anspruch 1, **dadurch gekennzeichnet, daß** anschließend an den vierten Schritt
- im fünften Schritt der C/C-Körper unter Erhalt seiner Form mit flüssigem Metall infiltriert wird, wobei zumindest teilweise eine Reaktion des Kohlenstoff-Anteils der Matrix des C/C-Körpers mit dem Metall unter Bildung von Carbiden abläuft.

3. Verfahren nach einem der vorhergehenden Ansprüche, **dadurch gekennzeichnet, daß** die Schwindung mindestens 20 % des ursprünglichen Kernvolumens beträgt.

4. Verfahren nach einem der vorhergehenden Ansprüche, **dadurch gekennzeichnet, daß** die Schwindung bei Temperaturen von mindestens 20 °C oberhalb der Formgebungstemperatur des Grünkörpers aus dem dritten Schritt einsetzt.

5. Verfahren nach einem der vorhergehenden Ansprüche, **dadurch gekennzeichnet, daß** die preßfähige Masse des zweiten Schrittes als Verstärkungsmittel Kohlenstoffasern mit einer mittleren Länge von mindestens 5 mm enthält.

6. Verfahren nach Anspruch 5, **dadurch gekennzeichnet, daß** die preßfähige Masse des zweiten Schrittes so in die Form gefüllt wird, daß die Kohlenstoffasern überwiegend parallel zur Richtung der höchsten Zugbeanspruchung des resultierenden Formteils orientiert sind.

7. Verfahren nach einem der Ansprüche 1 bis 4, **dadurch gekennzeichnet, daß** die preßfähige Masse des zweiten Schrittes als Verstärkungsmittel Kohlenstoffasern in Form von beschichteten Kurzfaserbündeln enthält.

8. Verfahren nach einem der vorhergehenden Ansprüche, **dadurch gekennzeichnet, daß** das Material der preßfähigen Massen Peche ausgewählt aus Kohlenteerpech oder Erdölpech und/oder Harze ausgewählt aus Phenolharzen, Epoxidharzen, Polyimiden, füllstoffhaltigen Mischungen mit Furfurylalkohol und Furanharzen enthält.

9. Verfahren nach einem der vorhergehenden Ansprüche, **dadurch gekennzeichnet, daß** das Material der Kerne einen linearen thermischen Ausdehnungskoeffizient bis zu seiner Zersetzungstemperatur von höchstens 1·10⁻⁵ K⁻¹ aufweist.

10. Verfahren nach einem der vorhergehenden Ansprüche, **dadurch gekennzeichnet, daß** das Material der Kerne bei Pyrolysetemperaturen von ca. 900 °C einen Kohlenstoffrückstand oder Pyrolyserückstand aufweist, der mindestens 25 % und besonders bevorzugt mindestens 30 % der Masse des eingesetzten Kerns beträgt.

11. Verfahren nach einem der vorhergehenden Ansprüche, **dadurch gekennzeichnet, daß** das Material der Kerne ausgewählt ist aus Holz, Preßholz, synthetischen Holzformmassen und Duroplasten.

12. Verfahren nach einem der vorhergehenden Ansprüche, **dadurch gekennzeichnet, daß** das Material der Kerne Füllstoffe enthält,

13. Verfahren nach Anspruch 12, **dadurch gekennzeichnet, daß** die Füllstoffe ausgewählt sind aus keramischen Materialien, Mineralstoffen, Metallen, Glas und Duroplasten.

14. Verfahren nach Anspruch 12 oder 13, **dadurch gekennzeichnet, daß** die Füllstoffe ausgewählt sind aus Kreide, Glaskugeln, Mikroglaskugeln, Wollastonit, Glasfasern, Kohlenstoffasern, und keramischen Fasern.

## Claims

1. Process for producing hollow bodies comprising fibre-reinforced ceramic materials, where
- cores whose shape corresponds to that of the hollow spaces are produced in a first step,
- a green body is produced in a second step by introducing the abovementioned cores and a pressable composition into a mould, where the pressable composition comprises carbon fibres and/or carbon threads and pitch and/or resins which form carbon-containing residues on heat treatment in the absence of oxidants, in such a way that the position of the cores corresponds to the desired position of the hollow spaces to be formed,
- the green body containing the cores is strengthened by heating to a temperature of from 120°C to 280°C in a pressing mould by pressing under pressure in a third step,
- the strengthened green body containing the cores, also referred to as intermediate body, is carbonized in a fourth step by heating in the absence of air and other oxidants to a temperature of from about 750°C to about 1100°C to give a C/C body,
wherein the cores comprise a material which is nonmeltable but above the curing temperature in the shaping by pressing of the pressable composition decomposes at least partly during the treatment up to and during the carbonization of the green body containing the cores with a volume shrinkage of at least 10% of the original volume of the cores so that the shrunken cores can be taken out from the carbonized body and the pyrolysis residue of the cores at 900°C is at least 10% of their original mass.

2. Process according to Claim 1, **characterized in that**, subsequent to the fourth step,
- the C/C body is infiltrated with liquid metal with retention of its shape in a fifth step, with at least partial reaction of the carbon present in the matrix of the C/C body with the metal to form carbides occurring.

3. Process according to any one of the preceding claims, **characterized in that** the shrinkage is at least 20% of the original core volume.

4. Process according to any one of the preceding claims, **characterized in that** the shrinkage commences at temperature is at least 20°C above the temperature at which the green body is shaped in the third step.

5. Process according to any one of the preceding claims, **characterized in that** the pressable composition of the second step comprises carbon fibres having a mean length of at least 5 mm as reinforcing material.

6. Process according to Claim 5, **characterized in that** the pressable composition of the second step is introduced into the mould in such a way that the carbon fibres are predominantly oriented parallel to the direction of the highest tensile stress in the resulting shaped part.

7. Process according to any one of Claims 1 to 4, **characterized in that** the pressable composition of the second step comprises carbon fibres in the form of coated short fibre bundles as reinforcing material.

8. Process according to any one of the preceding claims, **characterized in that** the material of the pressable compositions comprises pitches selected from among coaltar pitch and petroleum pitch and/or resins selected from among phenolic resins, epoxy resins, polyimides, filler-containing mixtures with furfuryl alcohol and furan resins.

9. Process according to any one of the preceding claims, **characterized in that** the material of the cores has a linear coefficient of thermal expansion up to its decomposition temperature of not more than 1 x 10⁻⁵ K⁻¹.

10. Process according to any one of the preceding claims, **characterized in that** the material of the cores leaves a carbon residue or pyrolysis residue at pyrolysis temperatures of about 900°C which amounts to at least 25% and particularly preferably at least 30% of the mass of the core used.

11. Process according to any one of the preceding claims, **characterized in that** the material of the cores is selected from among wood, composite wood, synthetic wood moulding compositions and thermosets.

12. Process according to any one of the preceding claims, **characterized in that** the material of the cores comprises fillers.

13. Process according to Claim 12, **characterized in that** the fillers are selected from among ceramic materials, mineral materials, metals, glass and thermosets.

14. Process according to Claim 12 or 13, **characterized in that** the fillers are selected from among chalk, glass spheres, glass microspheres, wollastonite, glass fibres, carbon fibres and ceramic fibres.

## Revendications

1. Procédé de fabrication d'objets creux en matériaux céramiques renforcés de fibres, dans lequel,
dans une première étape, sont fabriqués des noyaux, dont le moule correspond aux cavités,
dans une deuxième étape, est fabriquée une pièce à l'état « vert », dans laquelle lesdits noyaux et une matière moulable par compression remplissent un moule, la matière moulable par compression contenant des fibres de carbone et/ou des filaments de carbone et du brai et/ou des résines, lesquels forment par traitement thermique en absence de matières oxydantes des résidus carbonés, de telle sorte que la place occupée par les noyaux corresponde à la place désirée des cavités à former,
dans une troisième étape, la pièce à l'état « vert » contenant les noyaux est durcie par chauffage à une température de 120°C à 280°C dans un moule par application d'une pression,
dans une quatrième étape, la pièce à l'état « vert » solidifiée, contenant les noyaux, désignée aussi par pièce préformée, est carbonisée par chauffage en absence d'air et autres matières oxydantes, à une température d'environ 750°C à environ 1100°C, en une pièce C/C,
dans lequel les noyaux sont composés d'un matériau, qui n'est pas fusible, et qui se décompose cependant au-dessus de la température de durcissement, au moment du façonnage sous pression de la matière moulable par compression, au moins partiellement pendant le traitement, jusqu'à et pendant la carbonisation de la pièce à l'état « vert » contenant les noyaux avec diminution de volume d'au moins 10 % des volumes initiaux des noyaux, de telle sorte que les noyaux disparus se laissent extraire du solide carbonisé, et le résidu de pyrolyse des noyaux à 900°C s'élevant au moins à 10 % de la masse d'origine.

2. Procédé selon la revendication 1, **caractérisé en ce que**, à la suite de la quatrième étape,
dans une cinquième étape, le solide C/C est infiltré en conservant sa forme avec du métal liquide, dans lequel une réaction a lieu, au moins partiellement, entre la portion de carbone de la matrice du solide C/C et le métal avec formation de carbures.

3. Procédé selon l'une quelconque des revendications précédentes, **caractérisé en ce que** la diminution est au moins égale à 20 % du volume initial du noyau.

4. Procédé selon l'une quelconque des revendications précédentes, **caractérisé en ce que** la diminution commence à des températures situées à au moins 20°C au-dessus de la température de façonnage de la pièce à l'état « vert » de la troisième étape.

5. Procédé selon l'une quelconque des revendications précédentes, **caractérisé en ce que** la matière moulable par compression de la deuxième étape contient comme matériau de renforcement des fibres de carbone avec une longueur moyenne d'au moins 5 mm.

6. Procédé selon la revendication 5, **caractérisé en ce que** la matière moulable par compression de la deuxième étape remplit le moule de telle sorte que les fibres de carbone soient orientées principalement parallèlement à la direction de l'effort de traction le plus élevé de la pièce moulée résultante.

7. Procédé selon l'une quelconque des revendications 1 à 4, **caractérisé en ce que** la matière moulable par compression de la deuxième étape contient comme matériau de renforcement des fibres de carbone sous la forme d'amas de fibres courtes empilés.

8. Procédé selon l'une quelconque des revendications précédentes, **caractérisé en ce que** le matériau de la matière moulable par compression contient du brai choisi parmi le brai de goudron de houille ou le brai de pétrole et/ou des résines choisies parmi les résines phénoliques, les résines époxydes, les polyimides, les mélanges contenant des charges avec de l'alcool furfurylique et des résines furaniques.

9. Procédé selon l'une quelconque des revendications précédentes, **caractérisé en ce que** le matériau des noyaux présente un coefficient de dilatation thermique linéaire jusqu'à sa température de décomposition au plus égal à 1x10⁻⁵ K⁻¹.

10. Procédé selon l'une quelconque des revendications précédentes, **caractérisé en ce que** le matériau des noyaux présente, à une température de pyrolyse d'environ 900°C, un résidu carboné ou un résidu de pyrolyse qui s'élève au moins à 25 % et particulièrement au moins à 30 % de la masse du noyau utilisé.

11. Procédé selon l'une quelconque des revendications précédentes, **caractérisé en ce que** le matériau des noyaux est choisi parmi le bois, le bois comprimé, les matières à mouler synthétiques à base de bois et les résines thermodurcissables.

12. Procédé selon l'une quelconque des revendications précédentes, **caractérisé en ce que** le matériau des noyaux contient des charges.

13. Procédé selon l'une quelconque des revendications précédentes, **caractérisé en ce que** les charges sont choisies parmi les matériaux céramiques, les produits minéraux, les métaux, le verre et les résines thermodurcissables.

14. Procédé selon la revendication 12 ou la revendication 13, **caractérisé en ce que** les charges sont choisies parmi la craie, les billes de verre, les microsphères de verre, la wollastonite, les fibres de verre, les fibres de carbone, et les fibres de céramique.
